# EUROPEAN PATENT SPECIFICATION

(11) **EP 3 724 034 B1**
(45) Date of publication and mention of the grant of the patent: **26.01.2022**
(21) Application number: 18815363.9
(22) Date of filing: 26.10.2018
(51) Int. Cl.: B60R 9/10, B60R 9/058

(54) **DEVICE FOR TRANSPORTING BICYCLES ON MOTOR VEHICLES**
VORRICHTUNG ZUM TRANSPORTIEREN VON FAHRRÄDERN AUF KRAFTFAHRZEUGEN
DISPOSITIF PERMETTANT DE TRANSPORTER DES BICYCLETTES SUR DES VÉHICULES À MOTEUR

(30) Priority: 14.12.2017 IT 201700143983
(43) Date of publication of application: 21.10.2020
(73) Proprietor: Aurilis Group Italia S.R.L., 12045 Fossano (CN) (IT)
(72) Inventor: GEMESIO, Matteo, 12045 Fossano (CN) (IT)
(74) Representative: Garavelli, Paolo
(86) International application number: PCT/IT2018/000140
(87) International publication number: WO 2019/116403

(56) References cited:
- DE-U1-202015 104 516
- GB-A- 2 539 938

## Description

The present invention refers to a device for transporting bicycles on motor vehicles, configured for transporting bicycles on the roof of a car. In particular, the invention refers to a device for transporting bicycles on motor vehicles which can be used to transport at least one bicycle arranged in the traveling direction of the vehicle, and at least one bicycle arranged in the opposite direction.

Devices are known for transporting bicycles on motor vehicles, connectable to the roof of a car, which comprise catching means to keep the bicycle in a vertical position, and fastening means to fasten the bicycle to the bicycle-carrier device.

When two bicycles are transported on the roof of a motor vehicle using these known devices for transporting bicycles, on medium-sized cars, it is always necessary to place a bicycle oriented along the traveling direction, and the second bicycle along the opposite direction to the traveling direction, assembling the catching means and the fastening means, configured to keep and fasten the second bicycle, along the opposite direction to the one used for the first bicycle, because the overall size of the two handlebars prevents from assembling the two bicycles side by side, both arranged along the traveling direction of the motor vehicle.

In order to be able to assemble the bicycle on the device in an opposite direction to the traveling one, it is not enough to assemble the catching means and the fastening means in reverse, because the closing components which must be driven to assemble the bicycle on the bicycle-carrier device would find themselves on the opposite part (towards the roof center) making it difficult to install the bicycle on the device for transporting bicycles.

It is therefore necessary, in addition to assemble the catching means and the fastening means in reverse, to disassemble the closing components, which must be driven to assemble the bicycles on the bicycle-carrier device, and re-assemble them on the correct part, oriented towards the user and towards the roof edge.

These known devices for transporting bicycles on motor vehicles, however, are not satisfactory and have the problem that, in order to disassemble the closing components and re-assemble them on the correct part, oriented towards the user, complex operations are necessary and the use of tools is required.

GB 2 539 938 discloses a device for transporting bicycles on motor vehicles according to the preamble of claim 1.

Object of the present invention is solving the above prior art problems, by providing a device for transporting bicycles on motor vehicles equipped with catching means and with fastening means of the bicycle, configured to be assembled on the device both for fastening a bicycle oriented in the traveling direction, and in the opposite direction in order to fasten a bicycle along the opposite direction to the traveling direction, with simple operations and without requiring the use of suitable tools.

The above and other objects and advantages of the invention, as will appear from the following description, are obtained with a device for transporting bicycles on motor vehicles as claimed in Claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the present invention as appears from the enclosed claims.

The present invention will be better described by some preferred embodiments thereof, provided as a non-limiting example, with reference to the enclosed drawings, in which:
- Figure 1 shows a perspective view of a device for transporting bicycles on motor vehicles according to the present invention and of an enlarged detail; and

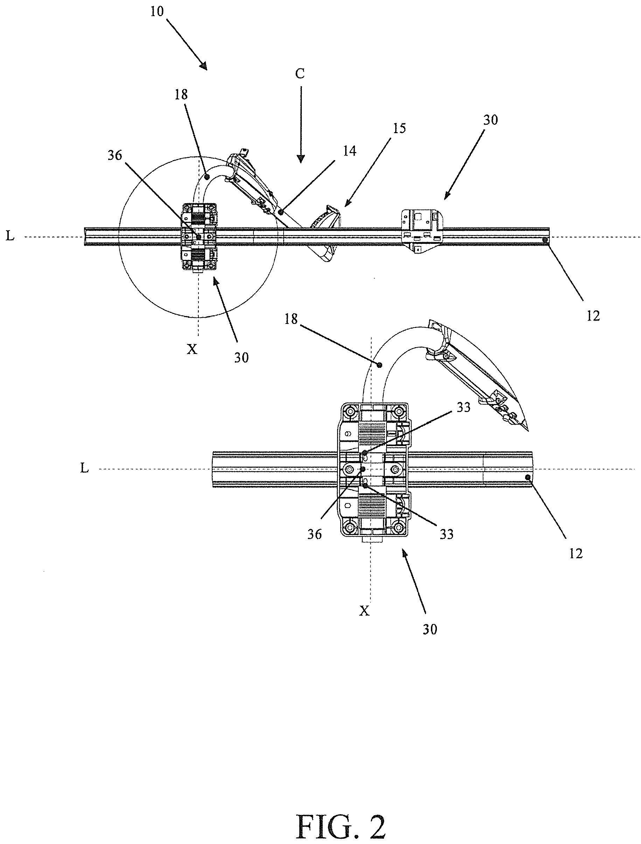

- Figure 2 shows a bottom view of a device for transporting bicycles on motor vehicles according to the present invention and of an enlarged detail.

With reference to the Figures, the device 10 for transporting bicycles on motor vehicles of the invention comprises a small channel 12 connectable through supporting means 30 to the roof of a motor vehicle, for example connectable to a pair of bars applied onto the roof of a car, an arm 14 connected rotatable to the small channel 12 and catching means 15 connected to the rotatable arm 14, for catching the bicycle and keeping it in a vertical position when its wheels are rested on the small channel 12.

The rotatable arm 14 is connected to the small channel 12, in order to be rotatable around an axis X transverse, preferably perpendicular, to a longitudinal direction L of the small channel 12.

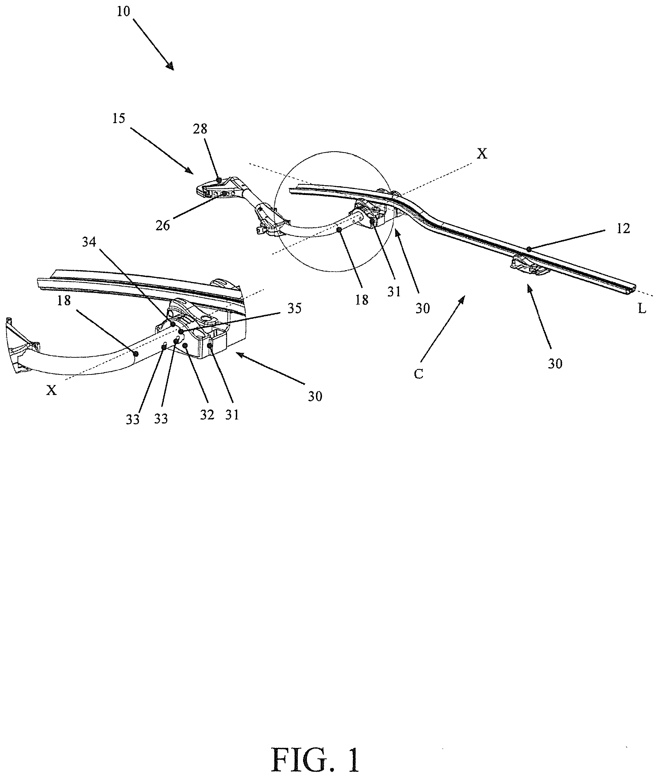

The device 10 for transporting bicycles on motor vehicles of the invention comprises guiding means 33, 34 associated with the rotatable arm 14 and the small channel 12 and configured for guiding the translation of the rotatable arm 14 in the direction of the rotation axis X of the arm 14, when this latter one is in an assembly position, in a preferred way in a substantially horizontal position, as shown in Figure 1, to allow inserting or withdrawing the arm and keeping it from the loading part C of the bicycle on the device 10, both when the small channel 12 is assembled on the motor vehicle in order to transport a bicycle oriented along the traveling direction, and when it is assembled in the opposite direction for transporting a bicycle oriented along the opposite direction to the traveling direction.

The device 10 for transporting bicycles on motor vehicles of the invention further comprises stopper means 36 configured to prevent the translation of the rotatable arm 14 along the direction of the rotation axis X of the arm 14, when this latter one is in a working position, different from the assembly position, for example in the position in which the rotatable arm 14 grasps the bicycle and keeps it in the vertical position with the wheels rested on the small channel 12.

The rotatable arm 14 is connected rotatable, in a preferred way with its lower part 18, to the small channel 12 through a connecting element 31, preferably associated with the supporting means 30.

Preferably, the guiding means 33, 34 comprise at least one inserting element 33, connected to the rotatable arm 14, in a preferred way to its lower part 18, and configured to be inserted into the connecting element 31 when the rotatable arm 14 is in the assembly position, in which the rotatable arm 14 is free of translating along the direction of the rotation axis X of the arm 14.

Preferably, the inserting element 33, when it is in the working position, cooperates with the stopper means 36 to block the translation of the rotatable arm 14 along the direction of the rotation axis X, preventing it from being disconnected fro the connecting element 31.

In a preferred way, the inserting element 33 is an element projecting from the rotatable arm 14, for example composed of a pin, a rivet or a screw, fastened to the rotatable arm 14, preferably to its lower part 18, and the guiding means 34 associated with the small channel 12 are composed of a seat 34 obtained in the connecting element 31, in which the inserting element 33 and the rotatable arm 14 can be inserted in the assembly position.

In a preferred way, the connecting element 31 comprises a plate 32, in cui the seat 34 is obtained; more preferably, the connecting element 31 comprises two plates 32, each obtained next to a longitudinal side of the small channel 12 and each comprising a seat 34.

In an embodiment of the device 10 for transporting bicycles on motor vehicles of the invention, the seat 34 comprises an opening, for example a hole, for passing the rotatable arm 14, on whose profile a recess 35 is obtained for passing the inserting element 33 when the rotatable arm 14 is in the assembly position.

Preferably, the guiding means 33 comprise two inserting elements 33 connected to the rotatable arm 14 and aligned along the direction of the rotation axis X, to allow inserting the rotatable arm 14 in the seat 34 from both longitudinal sides of the small channel 12 when the rotatable arm 14 is in the assembly position, to arrange the rotatable arm 14 always from the loading part C of the bicycle on the roof of the motor vehicle, both when the small channel 12 is assembled in order to load the bicycle along the traveling direction of the motor vehicle, and when it is assembled along the contrary direction, to load the bicycle in the opposite direction to the traveling direction of the motor vehicle.

Preferably, the stopper means 36 comprise a small plate 36 connected, for example fastened through screws or nuts, to the lower part of the small channel 12, to block the translation of the inserting element 33; when the inserting elements 33 are composed of two pins, rivets or screws projecting from the rotatable arm 14, the small plate 36 is assembled in order to be placed between the two inserting elements 33 to block their translation, and with it block the translation of the rotatable arm 14 along the direction of its rotation axis X, when it is in the working position.

In a preferred way, the rotatable arm 14 has a tubular shape, for example it is made of aluminum, is connected to the small channel 12 through the connecting element 31, and the small channel 12 is configured to be assembled onto the roof of a motor vehicle through supporting means 30 of a known type, comprising for example a front support, a rear support, a pair of carrier bars applied to the roof of a car to which the supports are connected; the device 10 for transporting bicycles on motor vehicles of the invention further comprises fastening means of the bicycle to the small channel, for example wheel-supporting cradles and wheel-blocking straps, also of a known type.

For example, the catching means 15 comprise a prima jaw 26 fastened to the rotatable arm 14, and a second mobile jaw 28 configured to be closed, through actuating means of a known type, against the first fixed jaw 26 to tighten the catching means 15 around a bicycle frame, and block it in a vertical position with the wheels rested on the small channel 12; similarly, the actuating means 22 are configured for opening the catching means 15, moving the second mobile jaw 28 away from the first jaw 26 fastened to the rotatable arm 14; alternatively, the catching means 15 can comprise other jaws of a known type, for example of the pliers type comprising two hinged arms.

In the operation of the device 10 for transporting bicycles on motor vehicles according to the present invention, a user, to assemble the rotatable arm 14 keeping it always from the loading part C of the bicycle on the motor vehicle, can rotate the arm around the axis X, to take it in the assembly position, in a preferred way substantially horizontal, in which the arm 14 can be easily withdrawn from the device 10, and inserted from the opposite part, after having rotated the small channel 12, for example in order to load a bicycle thereon along the opposite direction to the traveling direction of the motor vehicle or vice versa.

Advantageously, the device 10 for transporting bicycles on motor vehicles of the invention, due to the guiding means 33, 34 and preferably to the inserting element 33, can be easily withdrawn from the connecting element 31 and re-inserted on the opposite part of the small channel 12, without needing to use suitable tools, when the rotatable arm 14 is in the assembly position, in order to keep the arm 14 on the loading part C of the bicycle on the motor vehicle, both when the small channel 12 is assembled in order to load the bicycle along the traveling direction of the motor vehicle, and when it is assembled along the contrary direction.

Advantageously, the inserting element 33, when it is in the working position, further cooperates with the stopper means 36 to block the translation of the rotatable arm 14 along the direction of the rotation axis X, preventing it from being disconnected from the connecting element 31, to obtain a safe locking of the bicycle on the device 10 for transporting bicycles on motor vehicles of the invention.

## Claims

1. Device (10) for transporting bicycles on motor vehicles comprising:
- a small channel (12) connectable through supporting means (30) to a roof of a motor vehicle,
- an arm (14) connected rotatable to the small channel (12) through a connecting element (31),
- catching means (15) connected to the rotatable arm (14) for catching the bicycle and keeping it in a vertical position when its wheels are rested on the small channel (12), and
- guiding means (33, 34) associated with the rotatable arm (14) and the small channel (12) and configured for guiding the translation of the rotatable arm (14) along a direction of a rotation axis (X) of the arm (14), when this latter one is in an assembly position to allow inserting or withdrawing the arm and keeping it on a loading part (C) of the bicycle on the device (10), both when the small channel (12) is assembled on the motor vehicle in order to transport a bicycle oriented along the traveling direction, and when it is assembled along the opposite direction for transporting a bicycle oriented along the opposite direction to the traveling direction, the guiding means (33, 34) comprising at least one inserting element (33) connected to the rotatable arm (14) and configured to be inserted into the connecting element (31) when the rotatable arm (14) is in the assembly position, in which the rotatable arm (14) is free of translating along the direction of the rotation axis (X) of the arm (14),
**characterized in that** the guiding means (33) comprise two inserting elements (33) connected to the rotatable arm (14) and aligned along the direction of the rotation axis (X), to allow inserting the rotatable arm (14) in the seat (34) from both longitudinal sides of the small channel (12) when the rotatable arm (14) is in the assembly position, to arrange it always on the loading part (C) of the bicycle on the roof of the motor vehicle, both when the small channel (12) is assembled in order to load the bicycle along the traveling direction of the motor vehicle, and when it is assembled along the contrary direction, for loading the bicycle along the opposite direction to the traveling direction of the motor vehicle.

2. Device (10) for transporting bicycles on motor vehicles according to claim 1, **characterized in that** it further comprises stopper means (36) configured to prevent the translation of the rotatable arm (14) along the direction of the rotation axis (X) of the arm (14) when it is in a working position.

3. Device (10) for transporting bicycles on motor vehicles according to claim 1, **characterized in that** the inserting element (33), when it is in the working position, cooperates with the stopper means (36) to block the translation of the rotatable arm (14) along the direction of the rotation axis (X), preventing it from being disconnected from the connecting element (31).

4. Device (10) for transporting bicycles on motor vehicles according to claim 1 or 3, **characterized in that** the inserting element (33) is an element projecting from the rotatable arm (14) fastened in the rotatable arm (14) and the guiding means (34) associated with the small channel (12) are composed of a seat (34) obtained in the connecting element (31), in which the inserting element (33) and the rotatable arm (14) can be inserted in the assembly position.

5. Device (10) for transporting bicycles on motor vehicles according to claim 4, **characterized in that** the connecting element (31) comprises at least one plate (32) in which the seat (34) is obtained.

6. Device (10) for transporting bicycles on motor vehicles according to claim 4 or 5, **characterized in that** the seat (34) comprises an opening for passing the rotatable arm (14), on whose profile a recess (35) is obtained for passing the inserting element (33) when the rotatable arm (14) is in the assembly position.

7. Device (10) for transporting bicycles on motor vehicles according to any one of claims 1 to 6, **characterized in that** the stopper means comprise a small plate (36) connected to the lower part of the small channel (12) and configured to block the translation of the inserting element (33).

## Patentansprüche

1. Vorrichtung (10) zum Transportieren von Fahrrädern auf Kraftfahrzeugen umfassend:
- eine Nut (12), die mittels Stützmitteln (30) mit dem Dach eines Kraftfahrzeugs verbindbar ist,
- einen Arm (14), der mittels eines Verbindungselements (31) drehbar mit dem Kanal (12) verbunden ist,
- Greifmittel (15), die mit dem drehbaren Arm (14) verbunden sind, um das Fahrrad zu greifen und es in einer vertikalen Position zu halten, wenn seine Räder auf der Laufbahn (12) ruhen, und
- Führungsmittel (33, 34), die dem drehbaren Arm (14) und der Nut (12) zugeordnet sind und konfiguriert sind, um die Translation des drehbaren Arms (14) in Richtung der Drehachse (X) des Arms (14) zu führen, wenn sich letzterer in einer Montageposition befindet, um das Einsetzen oder Entfernen des Arms zu ermöglichen und von dem Ladeteil (C) des Fahrrads an der Vorrichtung (10) zu halten, und wenn der Kanal (12) am Fahrzeug montiert ist in a zum Transportieren eines in Fahrtrichtung weisenden Fahrrads, und wenn es in entgegengesetzter Richtung montiert ist, um ein entgegen der Fahrtrichtung weisendes Fahrrad zu transportieren, wobei die Führungsmittel (33, 34) mindestens einen Einschub umfassen Element (33), das mit dem drehbaren Arm (14) verbunden ist und konfiguriert ist, um in das Verbindungselement (31) eingesetzt zu werden, wenn sich der drehbare Arm (14) in der Montageposition befindet, in der der drehbare Arm (14) frei nach innen verschoben werden kann die Richtung der Achse (X ) Drehung des Arms (14),
**dadurch gekennzeichnet, dass** die Führungsmittel (33) zwei Einführelemente (33) umfassen, die mit dem drehbaren Arm (14) verbunden und in Richtung der Drehachse (X) ausgerichtet sind, um das Einführen des drehbaren Arms (14) in die Sitz (34) an beiden Längsseiten der Nut (12), wenn sich der drehbare Arm (14) in der Montageposition befindet, um ihn immer auf das Ladeteil (C) des Fahrrads auf dem Dach des Fahrzeugs zu setzen, und wenn die Nut (12) so angebracht ist, dass sie das Fahrrad in Fahrtrichtung des Kraftfahrzeugs belädt, und wenn sie in entgegengesetzter Richtung montiert ist, um das Fahrrad entgegen der Fahrtrichtung des Kraftfahrzeugs zu beladen.

2. Vorrichtung (10) zum Transportieren von Fahrrädern in Kraftfahrzeugen nach Anspruch 1, **dadurch gekennzeichnet, dass** sie ferner Anschlagmittel (36) umfasst, die dazu ausgelegt sind, eine Translation des drehbaren Arms (14) in Richtung der Drehachse (X) zu verhindern des Armes (14) in Arbeitsstellung.

3. Vorrichtung (10) zum Transportieren von Fahrrädern in Kraftfahrzeugen nach Anspruch 1, **dadurch gekennzeichnet, dass** das Einsteckelement (33) in der Arbeitsposition mit dem Anschlagmittel (36) zusammenwirkt, um die Translation des drehbaren Arms (14) zu blockieren. in Richtung der Drehachse (X) und verhindert ein Lösen vom Verbindungselement (31).

4. Vorrichtung (10) zum Transportieren von Fahrrädern auf Kraftfahrzeugen nach Anspruch 1 oder 3, **dadurch gekennzeichnet, dass** das Einschubelement (33) ein von dem im Schwenkarm (14) und den Führungsmitteln (34) die dem Kanal (12) zugeordnet sind, bestehen aus einer in das Verbindungselement (31) eingebrachten Aufnahme (34), in die das Einsteckelement (33) und der Dreharm (14) in der Montageposition einsteckbar sind.

5. Vorrichtung (10) zum Transportieren von Fahrrädern in Kraftfahrzeugen nach Anspruch 4, **dadurch gekennzeichnet, dass** das Verbindungselement (31) mindestens eine Platte (32) umfasst, in der der Sitz (34) hergestellt ist.

6. Vorrichtung (10) zum Transportieren von Fahrrädern auf Kraftfahrzeugen nach Anspruch 4 oder 5, **dadurch gekennzeichnet, dass** der Sitz (34) eine Öffnung zum Durchtritt des Dreharmes (14) aufweist, an deren Profil eine Aussparung angebracht ist (35) zum Durchführen des Einschubelementes (33) in der Montageposition der Schwinge (14).

7. Vorrichtung (10) zum Transportieren von Fahrrädern in Kraftfahrzeugen nach den Ansprüchen 1 bis 6, **dadurch gekennzeichnet, dass** die Anschlagmittel eine Platte (36) umfassen, die mit dem unteren Teil des Kanals (12) verbunden und so konfiguriert ist, dass sie die Translation des 'Einsatzelement (33).

## Revendications

1. Dispositif (10) de transport de bicyclettes sur véhicules automobiles comprenant :
- une rainure (12) qui peut être reliée au moyen de moyens de support (30) au toit d'un véhicule automobile,
- un bras (14) relié en rotation au canal (12) au moyen d'un élément de liaison (31),
- des moyens de préhension (15) reliés au bras rotatif (14) pour saisir la bicyclette et la maintenir en position verticale lorsque ses roues reposent sur le chemin de roulement (12), et
- des moyens de guidage (33, 34) associés au bras rotatif (14) et à la rainure (12) et configurés pour guider la translation du bras rotatif (14) dans le sens de l'axe de rotation (X) du bras (14), lorsque ce dernier est dans une position de montage pour permettre l'insertion ou le retrait et le maintien du bras de la partie de chargement (C) de la bicyclette sur le dispositif (10), et lorsque le canal (12) est monté sur le véhicule dans a pour transporter un vélo tourné dans le sens de la marche, et lorsqu'il est monté en sens inverse pour transporter un vélo tourné dans le sens opposé au sens de la marche, les moyens de guidage (33, 34) comportant au moins une élément (33) connecté au bras rotatif (14) et configuré pour être inséré dans l'élément de connexion (31) lorsque le bras rotatif (14) est dans la position de montage, dans laquelle le bras rotatif (14) est libre de se déplacer en le sens de rotation de l'axe (X ) du bras (14),
**caractérisé en ce que** les moyens de guidage (33) comprennent deux éléments d'insertion (33) reliés au bras rotatif (14) et alignés dans la direction de l'axe de rotation (X), pour permettre l'insertion du bras rotatif (14) dans le siège (34) sur les deux côtés longitudinaux de la rainure (12) lorsque le bras rotatif (14) est en position de montage, pour toujours le placer sur la partie de chargement (C) de la bicyclette sur le toit du véhicule, et lorsque la rainure (12) est montée pour charger la bicyclette dans le sens de déplacement du véhicule automobile, et lorsqu'elle est montée en sens inverse, pour charger la bicyclette dans le sens opposé au sens de déplacement du véhicule automobile.

2. Dispositif (10) de transport de bicyclettes sur véhicules automobiles selon la revendication 1, **caractérisé en ce qu'**il comprend en outre des moyens d'arrêt (36) configurés pour empêcher la translation du bras rotatif (14) dans le sens de l'axe (X) de rotation du bras (14) en position de travail.

3. Dispositif (10) de transport de bicyclettes sur véhicules automobiles selon la revendication 1, **caractérisé en ce que** l'élément d'insertion (33), lorsqu'il est en position de travail, coopère avec les moyens de butée (36) pour bloquer la translation du bras rotatif (14) dans le sens de l'axe de rotation (X), l'empêchant de se déconnecter de l'élément de liaison (31).

4. Dispositif (10) de transport de bicyclettes sur véhicules automobiles selon la revendication 1 ou 3, **caractérisé en ce que** l'élément d'insertion (33) est un élément faisant saillie du bras pivotant (14) fixé dans le bras pivotant (14) et les moyens de guidage (34) associés au canal (12) consistent en un siège (34) réalisé dans l'élément de connexion (31), dans lequel l'élément d'insertion (33) et le bras rotatif (14) peuvent être insérés en position de montage.

5. Dispositif (10) de transport de bicyclettes sur véhicules automobiles selon la revendication 4, **caractérisé par le fait que** l'élément de liaison (31) comprend au moins une plaque (32) dans laquelle est réalisée l'assise (34).

6. Dispositif (10) de transport de vélos sur véhicules automobiles selon la revendication 4 ou 5, **caractérisé en ce que** l'assise (34) comporte une ouverture pour le passage du bras rotatif (14), sur le profil de laquelle est ménagé un évidement (35) pour le passage de l'élément d'insertion (33) lorsque le bras oscillant (14) est en position de montage.

7. Dispositif (10) de transport de bicyclettes sur véhicules automobiles selon les revendications 1 à 6, **caractérisé en ce que** les moyens d'arrêt comprennent une plaque (36) reliée à la partie inférieure du canal (12) et configurée pour bloquer la translation du 'insérer l'élément (33).
